# EUROPEAN PATENT APPLICATION

(11) **EP 4 811 874 A1**
(43) Date of publication of application: **23.09.2026**
(21) Application number: 23958616.7
(22) Date of filing: 17.11.2023
(51) Int. Cl.: H04W 52/02

(54) **TRANSMISSION STATE DETERMINATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2023/132268
(87) International publication number: WO 2025/102342

(57) **Abstract**

Embodiments of the present application provide a transmission state determination method and apparatus, a terminal device, and a network device. The method comprises: a terminal device determines a transmission state, wherein there are a plurality of transmission states, and different transmission states are related to an energy storage state of the terminal device.

## Description

### TECHNICAL FIELD

Embodiments of the present disclosure relate to the technical field of mobile communications, in particular to a method and apparatus for transmission state determination, a terminal device, and a network device.

### BACKGROUND

The development of communication technologies imposes higher requirements on the price and power consumption of terminal devices. In particular, the zero-power terminals with low complexity, low cost and low power consumption are expected to become mainstream devices in future communication networks. Ambient energy-based terminals (i.e., Ambient terminals, or AMP terminals) are a typical example of zero-power terminals. These terminals derive the energy required for operation from the collection of ambient energy, which may include, for example, wireless radio frequency signals, solar energy, thermal energy, mechanical energy, etc.

When the AMP terminals are introduced into the current communication networks, because the energy of the AMP terminals comes from the environment, and the AMP terminals have limited energy storage capability. These may hinder AMP terminals from effectively supporting the transmission mechanisms used in the current communication networks, leading to failures in data transmission and reception.

### SUMMARY

The embodiment of the present disclosure provides a method and apparatus for transmission state determination, a terminal device, and a network device.

In a first aspect, a method for transmission state determination is provided, the method includes the following operation.

A terminal device determines a transmission state, where the transmission state includes a plurality of types, and different transmission states are related to an energy storage state of the terminal device.

In a second aspect, a method for transmission state determination is provided, the method includes the following operation.

A network device determines a transmission state of a terminal device, where the transmission state includes a plurality of types, and different transmission states are related to an energy storage state of the terminal device.

In a third aspect, there is provided an apparatus for transmission state determination, which is applied to a terminal device, the apparatus includes a first determination unit.

The first determination unit is configured to determine a transmission state, where the transmission state includes a plurality of types, and different transmission states are related to an energy storage state of the terminal device.

In a fourth aspect, there is provided an apparatus for transmission state determination, which is applied to a terminal device, the apparatus includes a second determination unit.

The second determination unit is configured to determine a transmission state of a terminal device, where the transmission state includes a plurality of types, and different transmission states are related to an energy storage state of the terminal device.

In a fifth aspect, a terminal device according to an embodiment of the present disclosure includes a processor and a memory. The memory is used for storing a computer program, and the processor is used for calling and running the computer program stored in the memory to execute the method for transmission state determination described above.

In a sixth aspect, a network device according to an embodiment of the present disclosure includes a processor and a memory. The memory is used for storing a computer program, and the processor is used for calling and running the computer program stored in the memory to execute the method for transmission state determination described above.

The chip provided by the embodiment of the present disclosure is used for realizing the method for transmission state determination described above.

Specifically, the chip includes a processor for calling and executing a computer program from a memory, so that a device on which the chip is mounted executes the method for transmission state determination described above.

The computer-readable storage medium provided by the embodiment of the present disclosure is used for storing a computer program, and the computer program causes the computer to execute the method for transmission state determination described above.

The computer program product provided by the embodiment of the present disclosure includes computer program instructions that cause a computer to execute the method for transmission state determination described above.

The computer program provided by the embodiment of the present disclosure causes the computer to execute the method for transmission state determination described above when it is executed on the computer.

An embodiment of the present disclosure provides a method for transmission state determination, where a terminal device can determine its transmission state, the transmission state includes a plurality of types, and different transmission states are related to an energy storage state of the terminal device. That is, the terminal device can determine the transmission state according to the energy storage state, so that the terminal device can reasonably utilize the energy storage state for transmission, and increase the success rate of data transmission.

### BRIEF DESCRIPTION OF THE DRAWINGS

The drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure. In the drawings:
FIG. 1 is a schematic diagram of communication system architecture according to an embodiment of the present disclosure.
FIG. 2 is a schematic principle diagram of a DRX mechanism according to an embodiment of the present disclosure.
FIG. 3 is a schematic timing diagram of DRX cycle switching according to an embodiment of the present disclosure.
FIG. 4 is a schematic flowchart of a method for transmission state determination according to an embodiment of the present disclosure.
FIG. 5 is a schematic diagram of a process in which a receiving state changes with an energy storage state according to an embodiment of the present disclosure.
FIG. 6 is a first schematic diagram of transmission state switching according to an embodiment of the present disclosure.
FIG. 7 is a second schematic diagram of transmission state switching according to an embodiment of the present disclosure.
FIG. 8 is a third schematic diagram of transmission state switching according to an embodiment of the present disclosure.
FIG. 9 is a fourth schematic diagram of transmission state switching according to an embodiment of the present disclosure.
FIG. 10 is a fifth schematic diagram of transmission state switching according to an embodiment of the present disclosure.
FIG. 11 is a first schematic structural diagram of an apparatus for transmission state determination according to an embodiment of the present disclosure.
FIG. 12 is a second schematic structural diagram of an apparatus for transmission state determination according to an embodiment of the present disclosure.
FIG. 13 is a schematic structural diagram of a communication device according to an embodiment of the present disclosure.
FIG. 14 is a schematic structural diagram of a chip according to an embodiment of the present disclosure.
FIG. 15 is a schematic block diagram of a communication system according to an embodiment of the present disclosure.

### DETAILED DESCRIPTION

The technical solutions of the embodiments of the present disclosure will be described below in combination with the drawings in the embodiments of the present disclosure. It will be obvious that the described embodiments are part of the embodiments of the present disclosure, but not all of them. All other embodiments obtained by those of ordinary skill in the art based on the embodiments in the present disclosure without creative work shall fall within the scope of protection of the present disclosure.

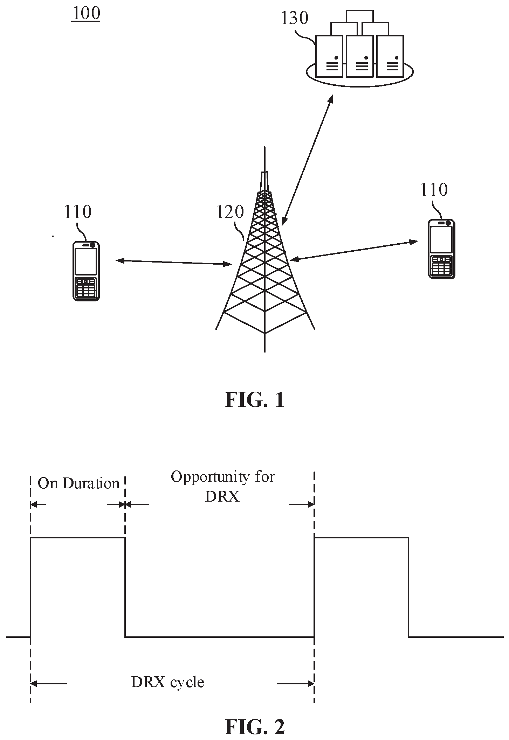

FIG. 1 is a schematic diagram of communication system architecture according to an embodiment of the present disclosure.

As shown in FIG. 1, the communication system 100 may include terminal devices 110 and a network device 120. The network device 120 may communicate with the terminal devices 110 through an air interface.

Multi-service transmission is supported between the terminal devices 110 and the network device 120.

It should be understood that embodiments of the present disclosure are illustrative only with the communication system 100, but are not limited thereto. That is, the technical solutions of the embodiments of the present disclosure may be applied to various communication systems, such as: Long Term Evolution (LTE) system, LTE Time Division Duplex (TDD), Universal Mobile Telecommunication System (UMTS), Internet of Things (IoT) system, Narrow Band Internet of Things (NB-IoT) system, enhanced Machine-Type Communications (eMTC) system, 5G communication system (also called New Radio (NR) communication system), or future communication system, etc.

In the communication system 100 shown in FIG. 1, the network device 120 may be an access network device that communicates with the terminal devices 110. The access network device may provide communication coverage for a particular geographic area, and may communicate with the terminal devices 110 (such as UEs) located within the coverage area.

The network device 120 may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN), or the network device 120 may be a relay station, an access point, a vehicle-mounted device, a wearable device, a hub, a switch, a bridge, a router, or a network device in a future evolutional Public Land Mobile Network (PLMN), etc.

The terminal device 110 may be any terminal device, which includes but not limited to a terminal device in wired or wireless connection with the network device 120 or other terminal devices.

For example, the terminal device 110 may refer to an access terminal, User Equipment (UE), a user unit, a user station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in a 5G network or a terminal device in a future evolution network, etc.

The terminal devices 110 may be used for Device to Device (D2D) communication.

The wireless communication system 100 may further include a core network device 130 that communicates with the network device 120. The core network device 130 may be a 5G Core (5GC) device, for example, an Access and Mobility Management Function (AMF), another example, an Authentication Server Function (AUSF), another example, a User Plane Function (UPF), and another example, a Session Management Function (SMF). Alternatively, the core network device 130 may also be an Evolved Packet Core (EPC) device in the LTE network, for example, a Session Management Function + Core Packet Gateway (SMF+PGW-C) device. It should be understood that SMF+PGW-C can realize the functions realized by the SMF and the PGW-C simultaneously. In the process of network evolution, the above core network device may also be called by other names, or a new network entity may be formed by dividing the functions of the core network, which is not limited by the embodiments of the present disclosure.

Various function units in the communication system 100 may also establish a connection through a next generation (NG) interface to realize communication.

For example, the terminal device establishes air interface connection with the access network device through a NR interface to send user plane data and control plane signaling. The terminal device may establish the control plane signaling connection with the AMF through an NG interface 1 (abbreviated as N1). The access network device, such as a next generation radio access base station (gNB), may establish the user plane data connection with the UPF through an NG interface 3 (abbreviated as N3). The access network device may establish the control plane signaling connection with the AMF through an NG interface 2 (abbreviated as N2). The UPF may establish the control plane signaling connection with the SMF through an NG interface 4 (abbreviated as N4). The UPF may interact user plane data with a data network through an NG interface 6 (abbreviated as N6). The AMF may establish the control plane signaling connection with the SMF through an NG interface 11 (abbreviated as N11). The SMF may establish the control plane signaling connection with the PCF through an NG Interface 7 (abbreviated as N7).

FIG. 1 exemplarily illustrates one network device, one core network device and two terminal devices. Alternatively, the wireless communication system 100 may include a plurality of network devices, and other numbers of terminal devices may be included within the coverage area of each network device, which is not limited by the embodiments of the present disclosure.

It should be noted that FIG. 1 only illustrates by way of example the system to which the present disclosure applies, and of course the method shown in the embodiments of the present disclosure may also be applicable for other systems. In addition, the terms "system" and "network" are often used interchangeably herein. In the present disclosure, the term "and/or" is merely an association relationship that describes associated objects, which indicate that there may be three relationships. For example, "A and/or B" may mean that there are three situations: A exists alone, A and B exist simultaneously, and B exists alone. In addition, the character "/" in the present disclosure generally indicates that there is "or" relationship between objects associated before and after. It should also be understood that the reference to "indication" in embodiments of the present disclosure may be a direct indication, may be an indirect indication, and may also be indicative of an association relationship. For example, A indicates B, which may mean that A directly indicates B, for example, B can be acquired by A. It may also mean that A indicates B indirectly, for example, A indicates C, and B can be acquired through C. It may also be indicated that there is an association relationship between A and B. It should also be understood that the reference to "corresponding" in embodiments of the present disclosure may mean that there is a direct or indirect correspondence relationship between the two objects, may also mean that there is an association relationship between the two objects, may also be a relationship between indication and being indicated, configuration and being configured, etc. It should also be understood that the "predefined" or "a predefined rule" referred to in embodiments of the present disclosure may be implemented by pre-storing corresponding codes, tables, or other means that may be used to indicate relevant information in the device (e.g., including the terminal device and the network device), the specific implementation of which is not limited by the present disclosure. For example, predefined may refer to defined in the protocol. It should also be understood that, in embodiments of the present disclosure, the "protocol" may refer to standard protocols in the communication field, such as the LTE protocol, the NR protocol, and related protocols applied in future communication systems, which are not limited in the present disclosure.

In order to facilitate understanding of the technical solutions of the embodiments of the present disclosure, the related technologies of the embodiments of the present disclosure are described below, and the following related technologies as alternative solutions may be arbitrarily combined with the technical solutions of the embodiments of the present disclosure, all of which belong to the protection scope of the embodiments of the present disclosure.

The development of communication technologies imposes higher requirements on the price and power consumption of terminal devices. In particular, the zero-power terminals with low complexity, low cost and low power consumption are expected to become mainstream devices in future communication networks.

Exemplarily, zero-power terminals may be divided into the following types based on the energy source and usage mode of the zero-power terminals.

### 1. Passive zero-power terminal

The passive zero-power terminal does not need a built-in battery. When the passive zero-power terminal approaches a network device (such as a reader/writer of the radio frequency identification system), the passive zero-power terminal is in the near-field range formed by the radiation of the antenna of the network device. In this case, an antenna of the passive zero-power terminal generates an induced current through electromagnetic induction, and the induced current drives the low power chip circuit of the zero-power terminal to work. Operations such as demodulation of the forward link signal and modulation of the backward link signal are realized. For the backscattering link, the zero-power terminal uses the backscattering implementation for signal transmission.

It can be seen that the passive zero-power terminal does not need the built-in battery to drive either the forward link or the backward link, so it is a true zero-power terminal.

The passive zero-power terminal does not need a battery, and the RF circuit and the baseband circuit of the passive zero-power terminal are very simple. For example, a Low Noise Amplifier (LNA), a Power Amplifier (PA), a crystal oscillator, an Analog to Digital Converter (ADC) and the like are not required by the passive zero-power terminal, and thus the passive zero-power terminal has many advantages, such as small size, light weight, very low price and long service life.

### 2. Semi-passive zero-power terminal

The semi-passive zero-power terminal is not installed with a conventional battery, a Radio Frequency (RF) energy harvesting module may be used to harvest radio wave energy and store the harvested energy in an energy storage unit (such as, a capacitor). After the energy storage unit obtains the energy, the low power chip circuit of the zero-power terminal can be driven. Demodulation of the forward link signal and modulation of the backward link signal are realized. For the backscattering link, the zero-power terminal uses the backscattering implementation for signal transmission.

It can be seen that the semi-passive zero-power terminal does not need a built-in battery to drive either the forward link or the backward link. Although the energy stored by capacitors is used during operating, the energy comes from the radio energy harvested by the energy harvesting module, so it is also a true zero-power terminal.

The semi-passive zero-power terminal inherits many advantages of the passive zero-power terminal, so it has many advantages such as small size, light weight, very low price and long service life.

### 3. Active zero-power terminal

The active zero-power terminal may be powered by a built-in battery. The battery is used to drive a low power chip circuit of the zero-power terminal, to implement demodulation of the forward link signal, modulation of the backward link signal and the like. However, for the backscattering link, the zero-power terminal uses the backscattering implementation for signal transmission. Therefore, the zero-power of such terminal is mainly reflected in the fact that the signal transmission on the backward link does not need the power of the terminal itself, but uses backscattering.

The active zero-power terminal can increase the communication distance of the zero-power terminal and improve the reliability of communication. Therefore, the active zero-power terminal can be applied in some scenarios with relatively high requirements on communication distance and reading delay.

At present, the 3rd Generation Partnership Project (3GPP) studies how to support ambient energy-based devices in NR systems and WiFi systems. The ambient energy-based devices can be called Ambient IoT, AMP IoT devices, AMP terminals, etc. The energy required for their operation comes from the collection of ambient energy, and the ambient energy source can be wireless radio frequency signals, solar energy, thermal energy, mechanical energy, etc. Such devices are similar to passive or semi-passive devices in zero-power communication. The AMP IoT device harvests ambient energy and stores it in an energy storage unit. After the energy storage unit obtains enough energy, it can drive the low-power circuit to work for signal demodulation of the forward link and signal modulation and transmission of the backward link.

Ambient IoT devices are roughly divided into three types, namely Device A, Device B and Device C. Different types of devices have corresponding complexity and communication capabilities. Device A does not have energy storage capabilities and cannot send independent signals, that is, it uses backscattering transmission. Device B has energy storage capabilities and cannot send independent signals. That is, it uses backscattering transmission and can use the stored energy to amplify the backscattering signals. Device C has energy storage capabilities, and it can send independent signals, that is, it has active transmission capabilities.

It should be noted that Device A has the lowest complexity and power consumption. The power consumption can be as low as 1 µW, but its communication distance is limited, generally only a few meters. Device A requires network device to provide carrier signals for backscattering transmission. Device C generally has a large capacitor to store energy from the environment, and its power consumption can support hundreds of µW, which can support active signal transmission, and has a large communication distance. Since Device C can perform active transmission, it does not require network device to provide carrier signals. The complexity and power consumption of Device B is between those of Device A and Device C.

The following describes the Discontinuous Reception (DRX) technology.

In practical applications, LTE and NR systems can use DRX mechanism to save power on terminal device. The principle of DRX mechanism is that the terminal device can enter a state of discontinuous reception instead of turning on the receiver all the time when there is no data reception, thus achieving the purpose of power saving. Referring to a schematic principle diagram of a DRX mechanism shown in FIG. 2, the DRX mechanism includes configuring a DRX cycle for a terminal device in the RRC_CONNECTED state, and one DRX cycle may consist of an On Duration and an Opportunity for DRX. During the "On Duration", the terminal device may listen for and receive downlink channels and signals including PDCCH. During the "Opportunity for DRX", the terminal device may not receive downlink channels and signals such as PDCCH to reduce power consumption.

In some embodiments, the DRX cycle of the terminal device may be configured as a short cycle and a long cycle. When the terminal device is in the DRX short cycle, it will start and restart a timer according to the reception situation of the data scheduling. When the timer expires, it can switch to the DRX long cycle to further save power. Meanwhile, the network may also enter the DRX short cycle or the DRX long cycle through DRX commands, where the DRX commands are sent to the UE through the MAC CE.

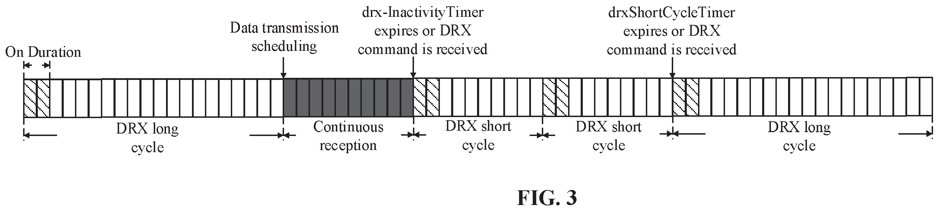

Referring to FIG. 3, a schematic timing diagram of DRX cycle switching is shown. It is assumed that the terminal device is configured with DRX long cycles and DRX short cycles. The terminal device is initially in the DRX long cycle, and when the data scheduling is received, the drx-InactivityTimer timer is started or restarted. When the drx-InactivityTimer timer expires or the terminal device receives a DRX Command, the terminal device can enter the DRX short cycle and start the drxShortCycleTimer timer at the same time. When the timer expires or the terminal device receives a Long DRX Command, the terminal device enters the DRX long cycle. Before the drx-InactivityTimer timer expires, the terminal device needs to continuously monitor the Physical Downlink Control Channel (PDCCH). Before the drxShortCycleTimer timer expires, the terminal device also needs to perform discontinuous reception according to the DRX short cycle.

In addition, Discontinuous Transmission (DTX) is similar to DRX in that it is for the purpose of power saving. In the DTX mechanism, the terminal device may be alternately in the "On Duration" and the "Opportunity for DRX", the terminal device turns the transmitter off during the "Opportunity for DRX", and turns the transmitter on until the "On Duration" is entered, and the execution is repeated according to a certain cycle.

It should be understood that the purpose of the DRX/DTX mechanism is to save power of the terminal device. Here, the "On Duration" and the "Opportunity for DRX" in the DRX/DTX mechanism are mainly determined by the activity of data transmission of the terminal device. For a conventional terminal device, which is mainly powered by a battery, the behavior of receiving or sending data does not need to consider the limitation of the energy storage state of the terminal device. When the current communication network, especially the cellular network, supports AMP terminal access, because the energy of AMP terminal comes from the environment, and the AMP terminal has limited energy storage capability, AMP terminal can't support the existing DRX/DTX mechanism well, thus causing the failure of data transmission and reception.

Based on this, an embodiment of the present disclosure provides a method for transmission state determination, where a terminal device can determine its transmission state, the transmission state includes a plurality of types, and different transmission states are related to an energy storage state of the terminal device. That is, the terminal device can determine the transmission state according to the energy storage state, so that the terminal device can reasonably utilize the energy storage state for transmission, and increase the success rate of data transmission.

In order to facilitate understanding of the technical solutions of the embodiments of the present disclosure, the technical solutions of the present disclosure are described in detail below through specific embodiments. The above related technologies as alternative solutions may be arbitrarily combined with the technical solutions of the embodiments of the present disclosure, all of which belong to the protection scope of the embodiments of the present disclosure. The embodiments of the present disclosure include at least some of the following.

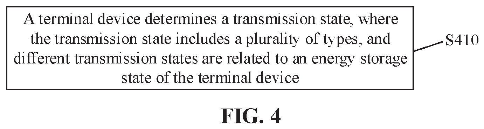

FIG. 4 illustrates a method for transmission state determination according to an embodiment of the present disclosure, which may include operations as follows.

At S410, a terminal device determines a transmission state, where the transmission state includes a plurality of types, and different transmission states are related to an energy storage state of the terminal device.

It should be noted that the transmission state can be understood as a transmission state or a communication state of data between the terminal device and the network device, and can be used to describe whether data transmission is performed between the terminal device and the network device, when data transmission is performed, the duration of each data transmission, and the like.

It should also be noted that the transmission state may include a receiving state and/or a sending state.

The receiving state may be used to describe whether the terminal device receives data, when the terminal device receives data, the duration of each data reception, and the like.

For example, the receiving state may be a DRX state, and the terminal device may listen for the downlink channels or signals during the "On Duration", and may not perform data reception during the "Opportunity for DRX".

In addition, the sending state may be used to describe whether the terminal device sends data, when the terminal device sends data, and the duration of each data transmission.

For example, the sending state may be a DTX state in which the terminal device turns on the transmitter during the "On Duration" and sends data, and turns off the transmitter during the "Opportunity for DRX" and does not sends data.

It should be noted that the transmission state of the terminal device may include a plurality of types, and the terminal device has different behaviors/operations for data transmission under different transmission states.

In some embodiments, the transmission state may be determined based on one or more of the following parameters, or the transmission state may be defined based on one or more of: whether to perform data transmission; a discontinuous transmission cycle; or a duration of continuous transmission within the discontinuous transmission cycle.

That is, the transmission state of the terminal device may be described according to one or more of whether data transmission is performed, a discontinuous transmission cycle, or a duration of continuous transmission within the discontinuous transmission cycle.

In one possible implementation, the transmission state of the terminal device may be a continuous transmission state in which the terminal device performs continuous data transmission, that is, as long as the terminal device is switched to the transmission state, the terminal device needs to continuously perform data transmission until it exits the transmission state.

In another possible implementation, the transmission state of the terminal device may be a non-transmission state in which the terminal device does not send data, that is, as long as the transmission state is entered, the terminal device needs to stop any data transmission.

In yet another possible implementation, the transmission state of the terminal device may be a discontinuous transmission state in which the terminal device performs discontinuous transmission, that is, after the terminal device enters the transmission state, it may perform data transmission for a part of the time and not perform data transmission for the rest of the time.

The discontinuous transmission state may be configured by a discontinuous transmission cycle and a continuous transmission duration. The discontinuous transmission cycle may be understood as the DRX cycle and/or the DTX cycle, and the duration of the continuous transmission may be understood as the length of the "On Duration" within the DRX cycle and/or the DTX cycle.

In some embodiments, the duration for data transmission may be different in different transmission states.

Exemplarily, in one transmission state, the terminal device performs any data transmission, and in another transmission state, the terminal device continues to perform data transmission. Alternatively, the terminal device performs discontinuous transmission, the total duration of discontinuous transmission of the terminal device in one transmission state is a first duration, and the total duration of discontinuous transmission of the terminal device in another transmission state is a second duration, and the first duration and the second duration are different.

In some embodiments, different transmission states may be determined based on different parameters. That is, in different transmission states, one or more of the following may be different: whether to perform data transmission; a discontinuous transmission cycle; or a duration of continuous transmission within the discontinuous transmission cycle. Exemplarily, the transmission states may include a first discontinuous transmission state and a second discontinuous transmission state, where the discontinuous transmission cycle and/or the duration of the continuous transmission may be different between the first discontinuous transmission state and the second discontinuous transmission state.

The plurality of transmission states of the terminal device may be predefined, or may be configured by the network device. For example, the network device may configure/update a plurality of transmission states for the terminal device through higher-layer signaling, or physical layer signaling. Specifically, the network device may configure the above-described parameters corresponding to each transmission state for the terminal device.

The terminal device in the embodiment of the present disclosure may be a zero-power terminal. Exemplarily, the terminal device may be an AMP terminal. Taking the energy harvesting mode as RF energy harvesting as an example, the AMP terminal collects radio waves through the RF energy harvesting module, thereby obtaining radio energy and storing it in the energy storage unit. After the energy storage unit obtains enough energy, it can drive the low-power circuit to work for signal demodulation of the forward link and signal modulation and transmission of the backward link.

For AMP terminals that perform energy harvesting through radio frequency signals, the energy of radio frequency signals received by their receivers can only realize one of information demodulation or energy harvesting. That is, before receiving the radio frequency signal, the AMP terminal needs to decide whether the current processing for the radio frequency signal is information demodulation or energy harvesting. If the current energy storage state allows, the AMP terminal can utilize the energy storage for information demodulation without performing energy harvesting. That is, the processing for the radio frequency signal by the AMP terminal depends on whether the current state is an energy harvesting state or a transmission state (or a communication state). The two states tend to be separate in time, i.e., they perform at different times. Part of this is because the communication signal and the radio frequency signal used for energy harvesting may not be in the same frequency band. Even if they are in the same frequency band, energy harvesting and communication can be carried out simultaneously, and the received power of the signal needs to be divided, one part for information demodulation and one part for energy harvesting. However, these methods require high complexity of receiver, and are not suitable for AMP terminals with very low complexity, which will also adversely affect the performance of communication signals. For other ambient energy sources, the speed of energy harvesting may also be lower than the speed of energy consumed by data transmission, resulting in the AMP terminal being unable to receive continuously.

Based on this, in the embodiment of the present disclosure, the terminal device can determine whether the terminal device has sufficient energy for data transmission according to its energy storage state.

It should be noted that the energy storage state of the terminal device can be understood as an electric quantity state, a remaining electric quantity state, a remaining energy state, and the like of the terminal device, and the embodiment of the present disclosure is not limited thereto.

It should be understood that the behavior/operation of the terminal device for data transmission is different due to different transmission states. Therefore, different transmission states correspond to different energy consumption. In the embodiment of the present disclosure, the transmission state of the terminal device may be related to the energy storage state of the terminal device. That is, the terminal device may determine an appropriate transmission state according to its energy storage state.

In an example, when the energy storage state of the terminal device indicates that the current energy storage is above a certain threshold, the terminal device may perform normal data transmission, and the transmission state of the terminal device may be a continuous transmission state or a discontinuous transmission state at this time. When the energy storage state of the terminal device indicates that the current energy storage is lower than a certain threshold, the terminal device cannot transmit data normally. In this case, the transmission state of the terminal device may be a non-transmission state, and the terminal device needs to perform energy harvesting until its energy storage state meets certain conditions.

In another example, when the energy storage state of the terminal device indicates that the current energy storage is high and continuous data transmission can be supported, the terminal device may determine that the transmission state is a continuous transmission state based on the energy storage state. When the energy storage state of the terminal device indicates that the current energy storage is moderate, the terminal device may determine that the transmission state is a discontinuous transmission state based on the energy storage state. When the energy storage state of the terminal device indicates that the current energy storage is small, the terminal device may determine that the transmission state of the terminal device is a non-transmission state based on the energy storage state.

In yet another example, when the energy storage state of the terminal device indicates that the current energy storage is higher than a certain threshold, the terminal device may determine that the transmission state is a first discontinuous transmission state, and when the energy storage state of the terminal device indicates that the current energy storage is lower than a certain threshold, the terminal device may determine that the transmission state is a second discontinuous transmission state. Where the discontinuous transmission cycle of the first discontinuous transmission state is smaller than the discontinuous transmission cycle of the second discontinuous transmission state, and/or the duration of the continuous transmission of the first discontinuous transmission state is greater than the duration of the continuous transmission corresponding to the second discontinuous transmission state. It will be appreciated that in the second discontinuous transmission state, the terminal device may have more time for energy harvesting and consume less power.

It can be understood that in the method for transmission state determination according to the embodiment of the present disclosure, the terminal device can determine the transmission state according to the energy storage state, so that the terminal device can reasonably utilize the energy storage state for transmission, and increase the success rate of data transmission.

In an embodiment of the present disclosure, the method for transmission state determination according to the embodiment of the present disclosure may further include the following operations.

A network device determines a transmission state of a terminal device, where the transmission state includes a plurality of types, and different transmission states are related to an energy storage state of the terminal device.

It should be noted that the relevant descriptions of the above transmission state and the energy storage state in the embodiments of the present disclosure can be understood with reference to the relevant descriptions in the above embodiments, and will not be described again here for simplicity.

It should be understood that, on the network device side, the network device can synchronously determine the transmission state of the terminal device, thereby performing data transmission with the terminal device based on the transmission state, and ensuring normal communication. For example, the network device may determine the transmission state of the terminal device according to the indication information from the terminal device, or determine the transmission state of the terminal device according to the timer, or determine the transmission state of the terminal device according to the data transmission situation of the terminal device. The specific determination method is described in the following embodiments for details, and will not be described in detail here for simplicity.

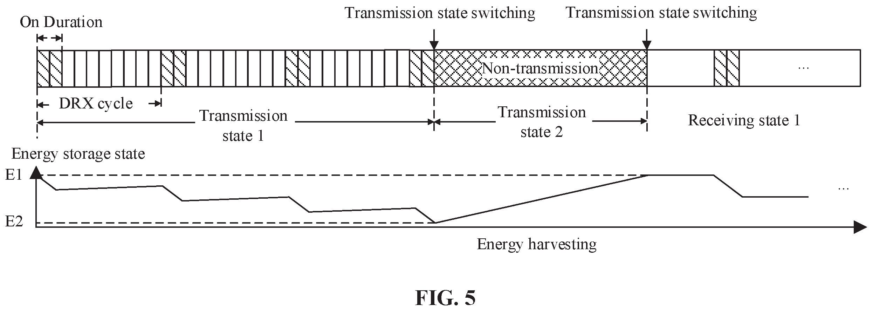

In the embodiment of the present disclosure, the transmission state may be changed with the energy storage state of the terminal device. For example, referring to a schematic diagram of a process in which a receiving state changes with an energy storage state shown in FIG. 5, the transmission state may include a transmission state 1 and a transmission state 2, and when the energy storage state of the terminal device is greater than E2, the terminal device may be in the transmission state 1. For the transmission state 1, the terminal device may perform discontinuous reception, where the cycle of the discontinuous reception is the "DRX cycle", and the terminal device performs detection of downlink signals or channels during the "On Duration" within each "DRX cycle". As the energy consumption caused by the detection of the downlink signals or channels, when the energy storage decreases from E1 to E2, the terminal device can switch the transmission state from the transmission state 1 to the transmission state 2. The transmission state 2 is a non-transmission state, and in the transmission state 2, the terminal device can perform energy harvesting. When the energy storage reaches E1, a transmission state switching is performed to switch the transmission state from the transmission state 2 to the transmission state 1.

It can be understood that the terminal device may switch between a plurality of transmission states, and correspondingly, the network device may also synchronously determine the switching of the terminal device between a plurality of transmission states. Possible manners in which the terminal device and the network device determine the transmission state switching are described in detail below.

In one possible manner, the terminal device and the network device may determine the switching of the transmission state by means of the indication information.

In some embodiments, the terminal device may send first information, and correspondingly, the network device may receive the first information from the terminal device. The first information may include one or more of: energy storage state switching information of the terminal device; or transmission state switching information of the terminal device.

The terminal device may send the first information to the network device when it is necessary to switch the transmission state. The energy storage state switching information is indicated by the first information, and/or the transmission state switching information. In this way, after receiving the first information, the network device may determine the switched energy storage state and/or transmission state of the terminal device.

In some embodiments, the first information may be sent when the energy storage state of the terminal device is switched.

As can be understood, since the transmission state of the terminal device is related to the energy storage state thereof, when the energy storage state of the terminal device is switched, the transmission state of the terminal device may be switched at the same time. Therefore, when the energy storage state of the terminal device is switched, the terminal device may send the first information to the network device, and indicate the energy storage state switching information and/or transmission state switching information through the first information. In this way, after receiving the first information, the network device may determine the switched energy storage state and/or transmission state of the terminal device.

In some embodiments, the energy storage state switching information may include the switched energy storage state, and for example, the first information may carry an index of the switched energy storage state, or identification information of the switched energy storage state. Correspondingly, the network device can obtain the transmission state associated with the switched energy storage state, thereby determining the switched transmission state of the terminal device.

Note that, if the number of energy storage states is 2, the energy storage state switching information may also indicate whether the energy storage state has switched. Exemplarily, 1-bit information may be included in the first information, where bit 0 represents no switching of the energy storage state and bit 1 represents switching of the energy storage state. Alternatively, bit 0 indicates switching of the energy storage state, and bit 1 indicates no switching of the energy storage state.

In some embodiments, the energy storage state switching information may include the switched energy storage state, and for example, the first information may carry an index of the switched energy storage state, or identification information of the switched energy storage state.

In some embodiments, the transmission state switching information may include a switched transmission state of the terminal device, and for example, the first information may carry an index of the switched transmission state or identification information of the switched transmission state. The network device can determine the switched transmission state of the terminal device according to the transmission state switching information.

Note that, if the number of transmission states is 2, the transmission state switching information may also indicate whether the transmission state has switched. Exemplarily, 1-bit information may be included in the first information, where bit 0 represents no switching of the transmission state and bit 1 represents switching of the transmission state. Alternatively, bit 0 indicates switching of the transmission state, and bit 1 indicates no switching of the transmission state.

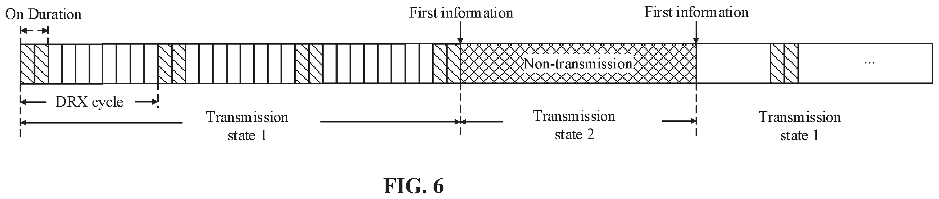

Exemplarily, referring to the first schematic diagram of transmission state switching shown in FIG. 6, the transmission state may include transmission state 1 and transmission state 2. In the transmission state 1, the terminal device may perform discontinuous reception, where the cycle of the discontinuous reception is the "DRX cycle", and the terminal device performs detection of downlink signals or channels during the "On Duration" within each "DRX cycle". The transmission state 2 is a non-transmission state, and the terminal device may not detect downlink signals and/or channels. When the energy storage state of the terminal device indicates that the current energy storage of the terminal device is less than a certain threshold (for example, E2 in FIG. 5), the terminal device may send first information to the network device, indicate to the network device that the energy storage state is E2 through the first information, or indicate the transmission state 2 to the network device through the first information. When the energy storage state of the terminal device indicates that the current energy storage of the terminal device is greater than a certain threshold (for example, E1 in FIG. 5), the terminal device may also send first information to the network device, indicate to the network device that the energy storage state is E1 through the first information, or indicate the transmission state 2 to the network device through the first information.

In some embodiments, the first information may also indicate one or more of: a duration for which the terminal device remains in a switched transmission state; a discontinuous transmission cycle in the switched transmission state; or a duration of continuous transmission within the discontinuous transmission cycle in the switched transmission state.

It can be understood that the terminal device may estimate the duration of being in the switched transmission state based on the current energy storage state and/or the energy harvesting time. In this way, the terminal device may indicate to the network device the duration of the switched transmission state by the first information. Further, the terminal device may also indicate to the network device the relevant parameters of the switched transmission state through the first information. For example, whether data transmission is performed in the switched transmission state, the discontinuous transmission cycle of the switched transmission state, and the duration of continuous transmission.

For example, the terminal device and the network device may pre-define or pre-configure different DRX modes. Here, different DRX models have different DRX parameters, such as the DRX cycle and the length of the "On Duration", and the like. The terminal device may indicate, in the first information, an index of the DRX mode or identification information corresponding to the switched transmission state.

In some embodiments, the first information may be carried by one or more of: Physical Uplink Shared Channel (PUSCH); semi-statically scheduled Physical Uplink Control Channel (PUCCH); Hybrid Automatic Repeat reQuest Acknowledgement (HARQ-ACK) feedback information corresponding to the PDCCH; or Uplink Control Information (UCI).

In some embodiments, when the network device schedules uplink data transmission of the terminal device, the terminal device may carry the first information in the PUSCH. For example, referring to FIG. 6, when the transmission state includes the transmission state 1 and the transmission state 2, the terminal device may carry 1-bit information in the PUSCH to indicate the switched transmission state or energy storage state. For example, bit 0 represents transmission state 1 and bit 1 represents transmission state 2. Alternatively, bit 0 represents energy storage state 1 and bit 1 represents energy storage state 2. Alternatively, bit 0 indicates no switching of the transmission state and bit 1 indicates switching of the transmission state.

It should be noted that the first information may be carried in a physical layer payload of the PUSCH, a Media Access Control (MAC) header of the PUSCH, or a MAC Control Element (MAC CE), and this is not limited in the embodiment of the present disclosure.

In some embodiments, when the network device adjusts downlink data reception of the terminal device, the terminal device may carry the first information in the HARQ-ACK feedback information. For example, referring to FIG. 6, when the transmission state includes the transmission state 1 and the transmission state 2, the terminal device may carry the HARQ-ACK feedback information in the PUCCH while carrying 1-bit information to indicate the switched transmission state or energy storage state. For example, bit 0 indicates the receiving state 1, and bit 1 indicates the receiving state 2. Alternatively, bit 0 represents energy storage state 1 and bit 1 represents energy storage state 2. Alternatively, bit 0 indicates no switching of the receiving state and bit 1 indicates switching of the receiving state.

In some embodiments, the terminal device may also carry the first information separately through the PUCCH. Note that the network device may semi-statically configure, through high-layer signaling, the PUCCH resources for the terminal device to send the first information, so as to allow the terminal device to report through the semi-statically configured PUCCH resource.

In some embodiments, the first information may be multiplexed with other periodic or aperiodic UCI feedback. For example, the first information may be carried in a Power Headroom Report (PHR) for reporting, or in a Channel State Information (CSI) report for reporting. Through the reported information, the network can promptly obtain the energy storage state or the receiving state switching information of the AMP terminal.

Note that, in a scenario in which the non-transmission state (that is, the terminal device does not perform data transmission in this transmission state, for example, the transmission state 2 shown in FIG. 6) is switched to another transmission state, due to the lack of downlink or uplink data scheduling, the terminal device may carry the first information separately based on the semi-statically scheduled PUCCH in this scenario.

Through the method, the network device can promptly determine the transmission state switching information of the terminal device according to the first information from the terminal device, thereby ensuring the correct transmission of data.

In some embodiments, the switching of the transmission state of the terminal device may also be indicated by the network device.

Exemplarily, the network device may send second information to the terminal device, and correspondingly, the terminal device may receive the second information from the network device, and the second information indicates the transmission state.

It can be understood that the network device may determine the to-be-switched transmission state of the terminal device by itself, and indicate the to-be-switched transmission state to the terminal device through the second information.

Exemplarily, the network device may determine the to-be-switched transmission state of the terminal device according to the energy storage state of the terminal device.

In some embodiments, the second information may carry an index or identification information of the indicated transmission state.

In some embodiments, the second information may further indicate a duration for which the terminal device remains in the transmission state, a discontinuous transmission cycle of the transmission state, and a duration of continuous transmission within the discontinuous transmission cycle.

In some embodiments, the network device may also receive the third information from the terminal device before sending the second information to the terminal device. Where the third information indicates the energy storage state of the terminal device.

It can be understood that the terminal device may report the energy storage state to the network device through the third information. In this way, the network device can determine the transmission state according to the energy storage state reported by the terminal device. Further, the network device may indicate the transmission state for the terminal device through the second information.

Note that the terminal device may send the third information to the network device according to a certain cycle. Alternatively, the terminal device may send the third information to the network device when the energy storage state is switched. In this way, the network device can promptly determine the energy storage state of the terminal device according to the third information, thereby indicating the corresponding transmission state for the terminal device.

In another possible implementation, the terminal device and the network device may trigger the switching of the transmission state according to the timer.

In some embodiments, the transmission state may include a first transmission state and a second transmission state, and the terminal device may switch to the second transmission state when a first timer associated with the first transmission state expires. For the network side, when the first timer associated with the first transmission state expires, the network device may determine that the terminal device switches to the second transmission state.

Where the first timer may be started when the terminal device enters the first transmission state.

It should be noted that different timers may be associated with different transmission states. The duration of the timer associated with each transmission state may be the duration for which the terminal device remains in the transmission state, or the duration for which the terminal device remains in the energy storage state associated with the transmission state.

Here, the duration of the timer associated with different transmission states may be predefined, or may be configured by a network device, and the embodiment of the present disclosure is not limited thereto.

It should also be noted that the duration of the timer associated with the different transmission states may be related to one or more of the energy storage capability of the terminal device, the energy harvesting capability of the terminal device, the discontinuous transmission cycle corresponding to the associated transmission state, or the duration of continuous transmission within the discontinuous transmission cycle corresponding to the associated transmission state. In other words, the duration of the timer associated with the different transmission states may be determined based on one or more of the energy storage capability of the terminal device, the energy harvesting capability of the terminal device, the discontinuous transmission cycle corresponding to the associated transmission state, or the duration of continuous transmission within the discontinuous transmission cycle corresponding to the associated transmission state.

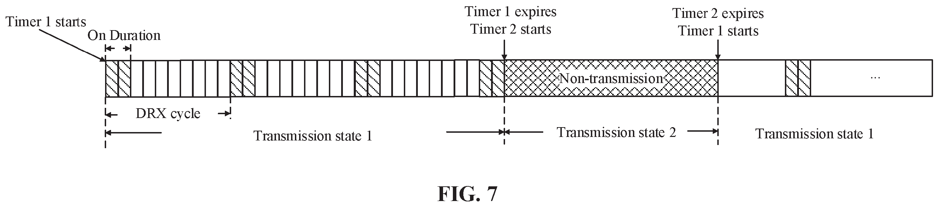

Exemplarily, referring to the second schematic diagram of transmission state switching shown in FIG. 7, the transmission state may include transmission state 1 and transmission state 2. When the terminal device is in the transmission state 1, the main power consumption lies in the blind detection and measurement of the downlink PDCCH. Regardless of whether the terminal device detects the PDCCH from the network device, after a certain time (that is, the duration of the timer 1), the energy storage of the terminal device will decrease, and it is necessary to switch to the transmission state 2 for more energy harvesting. Here, the duration of the timer 1 may be determined based on the DRX cycle of the transmission state 1 and the duration of the "On Duration". It can be understood that the longer the DRX cycle, or the shorter the duration of the "On Duration", the less power consumption of the terminal device in the transmission state 1, the more opportunities for energy harvesting, so the duration of timer 1 can be longer accordingly. Conversely, the shorter the DRX cycle, or the longer the duration of the "On Duration", the more power consumption of the terminal device in the transmission state 1, the less opportunity for energy harvesting, so the duration of timer 1 can be shorter accordingly.

In addition, when the terminal device is in the transmission state 2, the terminal device can perform energy harvesting. After a certain time (that is, the duration of the timer 2), the energy storage state of the terminal device will reach a certain threshold. At this time, the terminal device can switch to the receiving state 1 to continue the blind detection and measurement of downlink PDCCH. Here, the duration of the timer 2 may be determined based on the energy storage capability and the energy harvesting capability of the terminal device. Here, the stronger the energy storage capability of the terminal device or the stronger the energy harvesting capability, the shorter the duration of the timer 2. Conversely, the weaker the energy storage capability of the terminal device or the weaker the energy harvesting capability, the longer the duration of the timer 2 can be.

The energy storage capability of the terminal device may be related to the size and/or the number of energy storage units of the terminal device. In addition, the energy harvesting capability of the terminal device may be related to the size and/or number of energy harvesting units of the terminal device, and may also be related to the intensity of ambient energy.

It should also be noted that before the terminal device and the network device perform transmission state switching according to the timer, the following operations may be further included.

The terminal device sends the fifth information to the network device, and correspondingly, the network device receives the fifth information from the terminal device. Where the fifth information indicates one or more of: an energy storage capability of the terminal device; or an energy harvesting capability of the terminal device.

It can be understood that the terminal device can report its own capability to the network device in advance, so that the network device can determine the timer duration corresponding to each transmission state based on the capability information, so as to accurately determine the transmission state of the terminal device based on the timer duration corresponding to each transmission state, so as to ensure the correct transmission of data.

It should be noted that the fifth information may be carried by terminal device capability information or may be carried by dedicated signaling, and the embodiment of the present disclosure is not limited thereto.

In some embodiments, the transmission state may include only the first transmission state and the second transmission state, the transmission state switching between the first transmission state and the second transmission state. Specifically, when the terminal device enters the first transmission state, the terminal device and/or the network device may start a timer associated with the first transmission state, and determine to switch from the first transmission state to the second transmission state when the timer associated with the first transmission state expires. Meanwhile, when switching to the second transmission state, a timer associated with the second transmission state may be started, and when the timer associated with the second transmission state expires, switch back from the second transmission state to the first transmission state.

In some embodiments, the above transmission state may include other transmission states in addition to the first transmission state and the second transmission state, the plurality of transmission states may be arranged in a certain order (for example, the plurality of transmission states may be arranged in accordance with the power magnitude characterized by the energy storage state associated with the plurality of transmission states respectively), and the terminal device may switch between the plurality of transmission states. Exemplarily, the transmission state may further include a third transmission state. The first transmission state, the second transmission state, and the third transmission state may be arranged in a certain order. For example, the first transmission state may be switched to a second transmission state, the second transmission state may be switched to a third transmission state, and the third transmission state may be switched back to the first transmission state. Specifically, when the terminal device enters the first transmission state, the terminal device and/or the network device may start a timer associated with the first transmission state, and determine to switch from the first transmission state to the second transmission state when the timer associated with the first transmission state expires. Meanwhile, the timer associated with the second transmission state is started, and when the timer associated with the second transmission state expires, it is determined to switch from the second transmission state to the third transmission state. Meanwhile, the timer associated with the third transmission state may be started, and when the timer associated with the third transmission state expires, it is determined to switch from the third transmission state back to the first transmission state, and the timer associated with the first transmission state may be started.

It should be noted that the "first transmission state", the "second transmission state", and the "third transmission state" mentioned in the embodiment of the present disclosure are only for distinguishing different objects, and are not used to limit specific transmission states.

It can be understood that in the embodiment of the present disclosure, when the terminal device and the network device determine that the terminal device has entered a certain transmission state, the timer associated with the transmission state can be started. After the timer expires, the switch to the next transmission state occurs. By triggering the switching of transmission state by the timer, the signaling overhead of the terminal device and the network device can be reduced.

In some embodiments, before the first timer expires, the terminal device may restart the first timer if the energy storage state of the terminal device meets the first condition. The first condition is determined based on the energy storage state associated with the first transmission state.

That is, when the terminal device is in the first transmission state, if the energy storage state of the terminal device meets the first condition associated with the first transmission state before the expiration of the first timer associated with the first transmission state, the terminal device may restart the first timer and extend the time it remains in the first transmission state.

Exemplarily, when the first transmission state is a continuous transmission state or a discontinuous transmission state, the corresponding first condition may be that the current energy storage of the terminal device is greater than the energy storage required by the first transmission state within the duration of the first timer. When the first transmission state is a non-transmission state, the corresponding first condition may be that the current energy storage of the terminal device is insufficient, that is, the energy storage of the terminal device is less than a certain threshold.

It can be understood that in a scenario in which the transmission state switching is triggered based on the timer, when the terminal device is in a certain transmission state, a timer associated with the transmission state can be restarted when certain conditions are met, and the time for the terminal device remains in the transmission state can be extended.

In some embodiments, for the network side, the network device may restart a timer associated with a certain transmission state according to the indication information from the terminal device. Specifically, the terminal device may send fourth information to the network device, where the fourth information indicates one or more of: the energy storage state of the terminal device meets the first condition; or restarting the first timer.

It can be understood that the network device may restart the timer according to the fourth information from the terminal device. The fourth information may indicate that the energy storage state of the terminal device meets the first condition, and trigger the network device to restart the first timer by indicating that the energy storage state of the terminal device meets the first condition. Further, the fourth information may directly instruct the network device to restart the first timer.

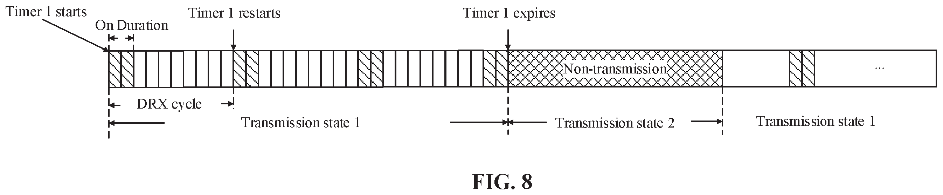

In an example, referring to the third schematic diagram of transmission state switching shown in FIG. 8, the transmission state may include transmission state 1 and transmission state 2. During the operation of the timer 1 associated with the transmission state 1, the terminal device may restart the timer 1 if the energy storage state of the terminal device indicates that the current energy storage is sufficient to support data transmission within the duration of the first timer. Meanwhile, the terminal device may send fourth information to the network device, and instruct the network device to restart the timer 1 through the fourth information.

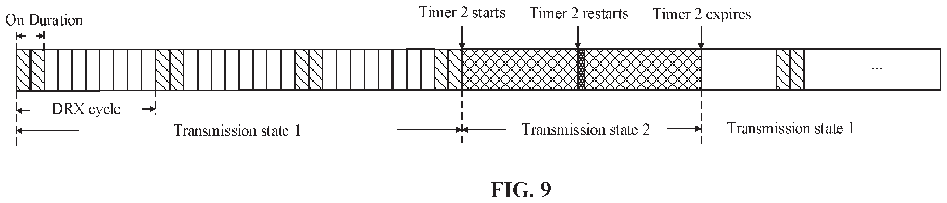

In another example, referring to the fourth schematic diagram of transmission state switching shown in FIG. 9, during the operation of the timer 2 associated with the transmission state 2, if the energy storage state of the terminal device indicates that the current energy storage is insufficient and the data transmission of the transmission state 1 cannot be continuously supported, the terminal device may restart the timer 2. Meanwhile, the terminal device may send fourth information to the network device, and instruct the network device to restart the timer 2.

Through the method, the network device and the terminal device can determine the switching of the transmission state based on the timer, and ensure the correct transmission of data.

In yet another possible implementation, the terminal device and the network device may trigger the switching of the transmission state according to the data transmission situation.

In some embodiments, the transmission state includes a first transmission state and a second transmission state. In the first transmission state, the terminal device switches to the second transmission state if the amount of data transported by the terminal device meets a first threshold associated with the first transmission state. For the network side, when the terminal device is in the first transmission state, if the amount of data transported by the terminal device meets the first threshold associated with the first transmission state, the network device may determine that the terminal device switches to the second transmission state.

It should be noted that different transmission states may be associated with different thresholds. The threshold may be the maximum amount of data transmission that can be handled by the energy storage state corresponding to the terminal device in the associated transmission state.

It should be understood that after the network device schedules downlink or uplink transmission of the terminal device, the terminal device needs to consume a certain amount of energy storage for demodulation of the reception, HARQ-ACK feedback, or sending of data. When the terminal device performs a certain amount of data transmission, it can be considered that the energy storage state of the terminal device has changed. At this time, the terminal device can switch the transmission state.

That is, the terminal device and the network device may count the amount of data transported by the terminal device in the first transmission state. If the number of transmission data meets a first threshold associated with the first transmission state, then determining that the transmission state is switched from the first transmission state to the second transmission state.

It should be noted that the thresholds associated with different transmission states may be predefined, or may be configured by network devices, and the embodiment of the present disclosure is not limited thereto.

It should also be noted that the threshold associated with the different transmission states may be related to one or more of the energy storage capability of the terminal device, the energy harvesting capability of the terminal device, the discontinuous transmission cycle corresponding to the associated transmission state, or the duration of continuous transmission within the discontinuous transmission cycle corresponding to the associated transmission state. In other words, the threshold associated with the different transmission states may be determined based on one or more of the energy storage capability of the terminal device, the energy harvesting capability of the terminal device, the discontinuous transmission cycle corresponding to the associated transmission state, or the duration of continuous transmission within the discontinuous transmission cycle corresponding to the associated transmission state.

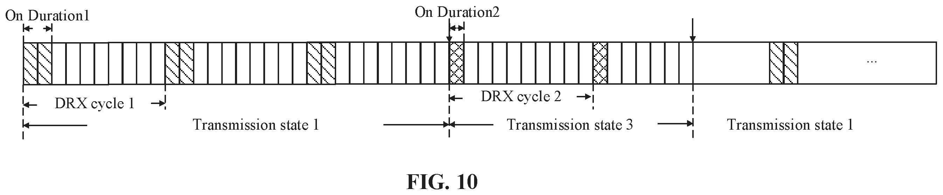

Exemplarily, referring to the fifth schematic diagram of transmission state switching shown in FIG. 10, the transmission state may include transmission state 1 and transmission state 3. The transmission state 1 and the transmission state 3 are both DRX states, where the cycle of the transmission state 1 is DRX cycle 1 and the cycle of the transmission state 3 is DRX cycle 2. The continuous transmission time of the transmission state 1 is On Duration 1, and the continuous transmission time of the transmission state 3 is On Duration 2.

Where, when the terminal device is in the transmission state 1, each time the terminal device performs data transmission, it needs to consume a certain amount of power for demodulation of the reception, HARQ-ACK feedback, or data transmission. When the amount of data transmission exceeds the threshold 1, the energy storage of the terminal device will decrease, and it is necessary to switch to the transmission state 2 to allow for more energy harvesting. Here, the duration of the threshold 1 may be determined based on the DRX cycle of the transmission state 1 and the duration of the "On Duration". It can be understood that the longer the DRX cycle, or the shorter the duration of the "On Duration", the less power consumption of the terminal device in the transmission state 1, the more opportunities for energy harvesting. Consequently, the amount of data transmission that can be supported is greater, and threshold 1 is larger. Conversely, the shorter the DRX cycle, or the longer the duration of the "On Duration", the more power consumption of the terminal device in the transmission state 1, the less opportunity for energy harvesting. Consequently, the amount of data transmission that can be supported is smaller, and threshold 1 is smaller.

Further, when the terminal device is in the transmission state 3, the terminal device may perform energy harvesting during the "Opportunity for DRX" of each DRX cycle. In the transmission state 3, if the amount of data transmission is less than the threshold 2, the more power the terminal device harvests. Here, the threshold 2 may be determined based on the energy storage capability and the energy harvesting capability of the terminal device. Here, the stronger the energy storage capability of the terminal device or the stronger the energy harvesting capability, the larger the threshold 2 can be. Conversely, the weaker the energy storage capability of the terminal device or the weaker the energy harvesting capability, the smaller the threshold 2 can be.

It should also be noted that before the terminal device and the network device perform transmission state switching according to the timer, the following operations may be further included.

The terminal device sends the fifth information to the network device, and correspondingly, the network device receives the fifth information from the terminal device. Where the fifth information indicates one or more of: an energy storage capability of the terminal device; or an energy harvesting capability of the terminal device.

It can be understood that the terminal device can report its own capability to the network device in advance, so that the network device can determine the threshold corresponding to each transmission state based on the capability information, so as to accurately determine the transmission state of the terminal device based on the threshold corresponding to each transmission state, so as to ensure the correct transmission of data.

It should be noted that the fifth information may be carried by terminal device capability information or may be carried by dedicated signaling, and the embodiment of the present disclosure is not limited thereto.

In some embodiments, the above transmission state may include only the first transmission state and the second transmission state, the transmission state switching between the first transmission state and the second transmission state. Specifically, the terminal device and/or the network device may count the amount of data transmission in the first transmission state, and determine to switch from the first transmission state to the second transmission state when the amount of data transmission in the first transmission state meets a first threshold associated with the first transmission state. Meanwhile, after switching to the second transmission state, the terminal device and/or the network device may count the amount of data transmission in the second transmission state, and when the amount of data transmission meets the second threshold associated with the second transmission state, switch back from the second transmission state to the first transmission state.

In some embodiments, the above transmission state may include other transmission states in addition to the first transmission state and the second transmission state, the plurality of transmission states may be arranged in a certain order (for example, the plurality of transmission states may be arranged in accordance with the power magnitude characterized by the energy storage state associated with the plurality of transmission states respectively), and the terminal device may switch between the plurality of transmission states. Exemplarily, the transmission state may further include a third transmission state. The first transmission state, the second transmission state, and the third transmission state may be arranged in a certain order. For example, the first transmission state may be switched to a second transmission state, the second transmission state may be switched to a third transmission state, and the third transmission state may be switched back to the first transmission state. Specifically, the terminal device and/or the network device may count the amount of data transmission in the first transmission state, and determine to switch from the first transmission state to the second transmission state when the amount of data transmission in the first transmission state meets a first threshold associated with the first transmission state. Meanwhile, after switching to the second transmission state, the terminal device and/or the network device may count the amount of data transmission in the second transmission state, and when the amount of data transmission meets the second threshold associated with the second transmission state, switch back from the second transmission state to the third transmission state. The terminal device and/or the network device may count the amount of data transmission in the second transmission state, and switch from the third transmission state to the first transmission state when the amount of data transmission meets a third threshold associated with the third transmission state.

It should be noted that the "first transmission state", the "second transmission state", and the "third transmission state" mentioned in the embodiment of the present disclosure are only for distinguishing different objects, and are not used to limit specific transmission states.

It can be seen that, in the embodiment of the present disclosure, when the terminal device and the network device determine that the terminal device enters a certain transmission state, the amount of data transmission in the transmission state can be counted. After the amount of data transmission meets the threshold associated with the transmission state, a switch to the next transmission state may be made. Triggering the switching of transmission state by counting the amount of data transmission can reduce the signaling overhead between the terminal device and the network device.

In some embodiments, in the first transmission state, if the amount of data transported by the terminal device does not meet the first threshold when the second timer expires, the terminal device restarts the second timer. For the network side, in the first transmission state, if the amount of data transported by the terminal device does not meet the first threshold when the second timer expires, the network device may restart the second timer.

The second timer is started when the terminal device enters the first transmission state.

It will be appreciated that the terminal device and/or the network device may count the amount of data transmission in the current transmission state within a certain period of time in order to determine whether the amount of data transmission in the transmission state meets a threshold associated with the current transmission state. Here, the terminal device and/or the network device may count the amount of data transmission in the current transmission state based on the second timer.

Further, when the second timer expires, if the amount of data transported by the terminal device does not meet the first threshold, the terminal device may restart the second timer so as to extend the time it remains in the current transmission state.

The above three manners of determining the transmission state may be implemented in combination.

In an example, the terminal device and the network device may determine the switching of the transmission state based on the indication information and the timer. Specifically, if the transmission state includes the first transmission state and the second transmission state, the network device may determine that the terminal device switches from the first transmission state to the second transmission state when the first timer associated with the first transmission state expires. If the terminal device sends the first information indicating the energy storage state switching information of the terminal device and/or the transmission state switching information of the terminal device to the network device before the first timer expires, the network device may respond to the first information and determine that the terminal device has switched the transmission state, without needing to wait until the first timer expires to determine that the transmission state of the terminal device has switched.

In another example, the terminal device and the network device may determine the switching of the transmission state based on the indication information and the data transmission situation. Specifically, if the transmission state includes a first transmission state and a second transmission state, in the first transmission state, it is determined to switch to the second transmission state if the amount of data transported by the terminal device meets a first threshold associated with the first transmission state. If the terminal device sends the first information indicating the energy storage state switching information of the terminal device and/or the transmission state switching information of the terminal device to the network device before the amount of data transported by the terminal device meets the first threshold, the network device may respond to the first information and determine that the terminal device has switched the transmission state, without needing to wait until the amount of data transmission meets the first threshold to determine that the transmission state of the terminal device has switched.

In yet another example, the terminal device and the network device may determine the switching of the transmission state based on the timer and the data transmission situation. Specifically, if the transmission state includes the first transmission state and the second transmission state, the network device may determine that the terminal device switches from the first transmission state to the second transmission state when either the first timer associated with the first transmission state expires or the amount of data transported by the terminal device meets the first threshold associated with the first transmission state.

In summary, through the method for transmission state determination according to the embodiment of the present disclosure, the terminal device and the network device can determine the transmission state according to the energy storage state of the terminal device, so that the terminal device and the network device can reasonably utilize the energy storage state of the terminal device for transmission, thereby increasing the success rate of data transmission.

Hereinafter, the method provided by the embodiment of the present disclosure will be described in detail with reference to specific application scenarios.

In the embodiment of the present disclosure, the terminal device is an AMP terminal. In this embodiment, according to the characteristics of the energy source of the AMP terminal, a method of discontinuous reception is proposed, which can reasonably use energy storage for discontinuous reception and increase the success rate of data transmission. The technical solution of the embodiment of the present disclosure includes the following contents.

The AMP terminal may determine the receiving state of the AMP terminal according to the energy storage state of the AMP terminal.

Note that, taking the energy harvesting mode as RF energy harvesting as an example, the AMP terminal collects radio waves through the RF energy harvesting module, thereby obtaining radio energy and storing it in the energy storage unit. After the energy storage unit obtains enough energy, it can drive the low-power circuit to work for signal demodulation of the forward link and signal modulation and transmission of the backward link.

For AMP terminals that perform energy harvesting through radio frequency signals, the power of radio frequency signals received by their receivers can only realize one of information demodulation or energy harvesting. That is, before receiving the radio frequency signal, the AMP terminal needs to decide whether the current processing for the radio frequency signal is information demodulation or energy harvesting. If the current energy storage state allows, the AMP terminal can utilize the energy storage for information demodulation without performing energy harvesting. The processing of the radio frequency signal by the AMP terminal depends on whether the current state is an energy harvesting state or a communication state. The two states tend to be separate in time, i.e., they perform at different times. Part of this is because the communication signal and the radio frequency signal used for energy harvesting may not be in the same frequency band. Even if they are in the same frequency band, energy harvesting and communication can be carried out simultaneously, and the received power of the signal needs to be divided, one part for information demodulation and one part for energy harvesting. However, these methods require high complexity of receiver, and are not suitable for AMP terminals with very low complexity, which will also adversely affect the performance of communication signals.

For other ambient energy sources, the speed of energy harvesting may also be lower than the speed of power consumed by communication, resulting in the AMP terminal being unable to receive continuously.

Therefore, when the energy storage state of the AMP terminal is above a certain threshold, continuous reception or discontinuous reception can be performed like a conventional terminal, and the receiving state at this time is defined as the receiving state 1 of the AMP terminal. When the energy storage state of the AMP terminal is below a certain threshold, the receiving state 1 cannot be supported, and the AMP terminal needs to store power until a certain energy storage state is met. During this time, the AMP terminal needs to enter the receiving state 2.

Specifically, the receiving state 1 may be a continuous receiving state or a discontinuous receiving state 1. Here, the parameters of the discontinuous state 1 can be configured by higher-layer signaling, such as the cycle of discontinuous reception, the length of the "On Duration", and the like.

Specifically, the receiving state 2 may be a non-receiving state or a discontinuous receiving state 2. Here, the parameters of the discontinuous state 2 can be configured by higher-layer signaling, such as the cycle of discontinuous reception, the length of the "On Duration", and the like. Preferably, the cycle of discontinuous reception in the discontinuous receiving state may be longer, the "On Duration" may be shorter, or the like than that in the discontinuous receiving state 1. Therefore, in the second discontinuous receiving state, the AMP terminal may have more opportunities for energy harvesting, as well as less power consumption.

The receiving state switching of the AMP terminal is described below.

In one implementation, the AMP terminal and the network device may determine switching of the receiving state based on the indication information.

When the energy storage state of the AMP terminal reaches or falls below a certain threshold, the indication information (i.e., the first information described above) needs to be sent to the network. The indication information may include an energy storage state, or receiving state switching information. When the AMP terminal is in the receiving state 1, the main power consumption lies in the detection and measurement of the downlink PDCCH. When the network schedules the data transmission of the AMP terminal through signaling, the AMP terminal may carry the indication information through the uplink channel.

Optionally, when the network schedules the AMP terminal to receive downlink data, the AMP terminal may carry indication information in the HARQ-ACK feedback information to indicate the current energy storage state or receiving state information. For example, the PUCCH carries HARQ-ACK feedback information and also carries 1-bit information indicating a subsequent receiving state, for example, bit 0 indicates receiving state 1 and bit 1 indicates receiving state 2. Alternatively, bit 0 represents energy storage state 1 and bit 1 represents energy storage state 2. Alternatively, bit 0 indicates no switching of the receiving state and bit 1 indicates switching of the receiving state.

Optionally, when the network schedules uplink data transmission for the AMP terminal, the AMP terminal may carry indication information in the uplink data channel, indicating the current energy storage state or receiving state information. For example, 1-bit information is carried in the PUSCH, which information may be carried in the physical layer payload, or carried in the MAC header, MAC CE, or the like.

Optionally, the AMP terminal may also carry the indication information separately through the PUCCH. The higher layer of the network may semi-statically configure PUCCH resources for sending the indication information, allowing the AMP terminal to report through these resources. This is similar to the existing method of sending SR.

Alternatively, the indication information may be multiplexed with other periodic or aperiodic UCI feedback, such as being multiplexed with a PHR report for reporting, or multiplexed with a CSI report for reporting. Through the reported information, the network can promptly obtain the energy storage state or the receiving state switching information of the AMP terminal.

Further, the above indication information may also indicate a duration for which the AMP terminal remains in the receiving state 2. The AMP terminal may indicate the duration for which the AMP terminal needs to remain in the receiving state 2 based on the estimation of the energy storage state or the energy harvesting time. Alternatively, the indication information may also indicate the DRX mode in which the AMP terminal is in the receiving state 2. This DRX mode has predefined or network-configured DRX parameters, such as the DRX cycle and the length of the "On Duration", etc.

Furthermore, the indication information may be sent by the AMP terminal to the network, or it may be sent by the network to the AMP terminal. Specifically, the network may determine whether to send indication information to instruct the AMP terminal to switch the receiving state according to the acquired energy storage state report of the AMP terminal.

In one implementation, the AMP terminal and the network device may determine switching of the receiving state based on the timer.

Referring to FIG. 7, when the AMP terminal is in the receiving state 1 (i.e., the transmission state 1 in FIG. 7), the main power consumption lies in the blind detection and measurement of the downlink PDCCH. Regardless of whether the PDCCH sent to the AMP terminal is detected, after a certain time, the energy storage of the AMP terminal will decrease, and it is necessary to switch to the receiving state 2 (i.e., the transmission state 2 in FIG. 7) to allow for more energy harvesting.

The switching from the receiving state 1 to the receiving state 2 may be performed according to the timer 1, and the duration of the timer 1 may be configured by the network or may be a preset value. Specifically, the preset value may be related to the energy storage capability or the energy harvesting capability of the AMP terminal. The energy harvesting capability can be related to the capability of the AMP terminal itself or the intensity of ambient energy. It may also be related to the DRX cycle of receiving state 1. The longer the DRX cycle, the less power consumption of the AMP terminal in the receiving state 1, the more opportunities for energy harvesting, so the duration of timer 1 can be longer accordingly.

Specifically, the timer 1 is started when the AMP terminal enters the receiving state 1. When timer 1 expires, the AMP terminal switches to the receiving state 2. Further, the timer may be restarted under certain conditions, such as being restarted based on the indication information fed back by the AMP terminal. When the energy storage state of the AMP terminal meets certain conditions, the network may be instructed to restart the timer through the feedback indication information, thereby extending the time the AMP terminal remains in the receiving state 1.

Additionally, the AMP terminal may determine the duration of being in the receiving state 2 based on timer 2. The length of the timer 2 may be configured by higher-layer signaling, or may be a preset value. Specifically, the preset value may be related to the energy storage capability or the energy harvesting capability of the AMP terminal. The energy harvesting capability can be related to the capability of the AMP terminal itself or the intensity of ambient energy. It may also be related to the DRX cycle in the receiving state 2. The longer the DRX cycle, the less power consumption of the AMP terminal in the receiving state 2, the more opportunities for energy harvesting, so the duration of the timer can be shorter accordingly.

Specifically, the timer is started when the AMP terminal enters the receiving state 2. When timer 2 expires, the AMP terminal switches to the receiving state 1. Further, the timer 2 may be restarted under certain conditions. For example, it may be restarted based on indication information fed back by the AMP terminal. When the energy storage state of the AMP terminal meets certain conditions, the network may be instructed to restart the timer through the feedback indication information, thereby extending the time the AMP terminal remains in the receiving state 2. For example, when the energy storage state of the AMP terminal is insufficient, the network may be instructed to restart the timer through the indication information, thereby extending the time the AMP terminal remains in the receiving state 2 for energy harvesting.

In yet another implementation, the AMP terminal and the network device may determine the switching of the receiving state based on the detection result of the PDCCH.

It should be understood that after the network schedules the downlink or uplink transmission of the AMP terminal, the AMP terminal needs to consume a certain amount of power for demodulation of the reception, HARQ-ACK feedback, or data transmission. After the network performs a certain amount of schedules, the AMP terminal switches to the receiving state 2. The amount of schedules may be network-configured or may be a preset value. Specifically, the preset value may be related to the energy storage capability or the energy harvesting capability of the AMP terminal. The energy harvesting capability can be related to the capability of the AMP terminal itself or the intensity of ambient energy. It may also be related to the DRX cycle in the receiving state 1. The longer the DRX cycle, the more opportunities the AMP terminal has for energy harvesting in reception state 1. Accordingly, the number of data schedules that can be supported may be greater.

When the AMP terminal is in the receiving state 2, if the AMP terminal is in the DRX state 2, if the activity of downlink data transmission scheduled by the network or uplink transmission required by the AMP terminal is very low, the need for the AMP terminal to switch to the receiving state 1 is low, and the duration of the AMP terminal in the receiving state 2 can be extended. This method may be combined with the timer method. During the period when the timer is running, if the number of received PDCCHs falls below a certain threshold, the timer may be restarted to extend the duration the AMP terminal remains in the receiving state 2.

In summary, when the access of AMP devices is supported in the cellular network, because the power of the AMP device comes from the environment and the AMP device has limited energy storage capability, the sending and receiving states of the AMP terminal may not align well with the existing DRX mechanism, potentially leading to failures in data sending and receiving. The method provided by the embodiment of the present disclosure can determine the receiving state of the AMP terminal through the energy storage state of the AMP terminal, so that the energy storage of the AMP terminal can be matched with the receiving state, and the energy storage can be reasonably used for data transmission, thus improving the efficiency of data transmission.

Preferred embodiments of the present disclosure have been described in detail with reference to the drawings, but the present disclosure is not limited to the specific details of the above embodiments. Within the scope of the technical conception of the present disclosure, various simple modifications can be made to the technical solutions of the present disclosure, and these simple modifications all belong to the scope of protection of the present disclosure. For example, various specific technical features described in the above specific embodiments may be combined in any suitable manner without contradiction, and various possible combinations are not further described in the present disclosure in order to avoid unnecessary repetition. For another example, any combination may be made between the various different embodiments of the present disclosure, so long as it does not depart from the idea of the present disclosure, it is likewise to be regarded as the contents of the present disclosure. For another example, on the premise of no conflict, various embodiments described in the present disclosure and/or the technical features in various embodiments can be arbitrarily combined with the prior art, and the technical solutions obtained after combination should also fall within the scope of protection of the present disclosure.

It should also be understood that in the various method embodiments of the present disclosure, the size of the sequence number of the above processes does not mean the execution sequence, and the execution sequence of the processes should be determined by their functions and inherent logic, and should not be defined in any way by the implementation process of the embodiments of the present disclosure. Further, in embodiments of the present disclosure, the terms "downlink", "uplink" and "sidelink" are used to denote transmission directions of signals or data. The "downlink" is used to denote a first direction of transmission of signals or data from a site to an UE of a cell. The "uplink" is used to denote a second direction of transmission of signals or data from an UE of a cell to a site. The "sidelink" is used to denote a third direction of transmission of signals or data from an UE 1 to an UE 2. For example, "downlink signal" means that the transmission direction of the signal is the first direction. In addition, in embodiments of the present disclosure, the term "and/or" is merely an association relationship that describes associated objects, which indicates that there may be three relationships. Specifically, "A and/or B" may represent three situations: A exists alone, A and B exist simultaneously, and B exists alone. In addition, the character "/" in the present disclosure generally indicates that there is "or" relationship between objects associated before and after.

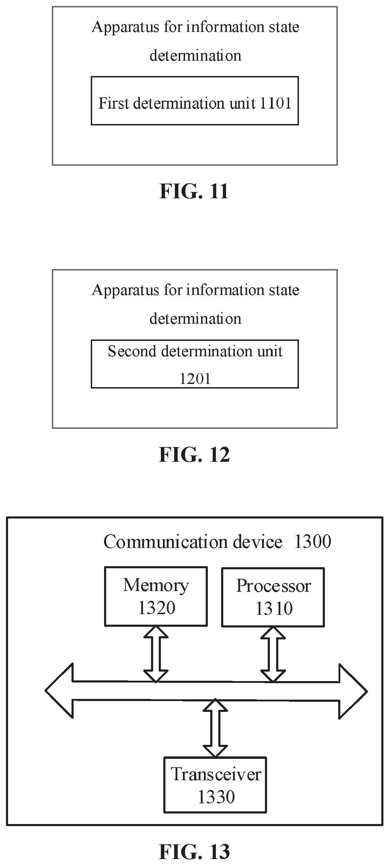

FIG. 11 is a first schematic structural diagram of an apparatus for transmission state determination according to an embodiment of the present disclosure, which is applied to a terminal device. As shown in FIG. 11, the apparatus for transmission state determination includes a first determination unit 1101.

The first determination unit 1101 is configured to determine a transmission state, where the transmission state includes a plurality of types, and different transmission states are related to an energy storage state of the terminal device.

In some embodiments, the duration for data transmission is different in different transmission states.

In some embodiments, the transmission state is determined based on one or more of following parameters: whether to perform data transmission; a discontinuous transmission cycle; or a duration of continuous transmission within the discontinuous transmission cycle.

In some embodiments, different transmission states are determined based on different parameters.

In some embodiments, the apparatus for transmission state determination further includes a first transmission unit configured to send first information, where the first information includes one or more of: energy storage state switching information of the terminal device; or transmission state switching information of the terminal device.

In some embodiments, the first information further indicates one or more of: a duration for which the terminal device remains in a switched transmission state; a discontinuous transmission cycle in the switched transmission state; or a duration of continuous transmission within the discontinuous transmission cycle in the switched transmission state.

In some embodiments, the first information is carried by one or more of: a Physical Uplink Shared Channel (PUSCH); a semi-persistently scheduled Physical Uplink Control Channel (PUCCH); HARQ-ACK feedback information corresponding to a Physical Downlink Control Channel (PDCCH); or Uplink Control Information (UCI).

In some embodiments, the apparatus for transmission state determination further includes a first receiving unit configured to receive second information from the network device. The second information indicates the transmission state.

In some embodiments, the first transmission unit is further configured to send third information to the network device, where the third information indicates the energy storage state of the terminal device.

In some embodiments, the transmission state includes a first transmission state and a second transmission state.

The first determination unit 1101 is further configured to switch to the second transmission state when a first timer associated with the first transmission state expires, where the first timer is started when the terminal device enters the first transmission state.

In some embodiments, the first determination unit 1101 is further configured to restart the first timer in a case that the energy storage state of the terminal device meets a first condition before the first timer expires, where the first condition is determined based on an energy storage state associated with the first transmission state.

In some embodiments, the first transmission unit is further configured to send fourth information to the network device, the fourth information indicates one or more of: the energy storage state of the terminal device meets the first condition; or restarting the first timer.

In some embodiments, the duration of the first timer is predefined, or configured by a network device, and the duration of the first timer is related to one or more of: an energy storage capability of the terminal device; an energy harvesting capability of the terminal device; a discontinuous transmission cycle corresponding to the first transmission state; or a duration of continuous transmission within the discontinuous transmission cycle corresponding to the first transmission state.

In some embodiments, the transmission state includes a first transmission state and a second transmission state, and the first determination unit 1101 is further configured to switch to the second transmission state if the amount of data transported by the terminal device meets a first threshold associated with the first transmission state in the first transmission state.

In some embodiments, the first determination unit 1101 is further configured to restart the second timer in a case that the amount of data transported by the terminal device does not meet the first threshold when a second timer expires in the first transmission state, where the second timer is started when the terminal device enters the first transmission state.

In some embodiments, the first threshold is predefined, or configured by a network device. The first threshold is related to one or more of: an energy storage capability of the terminal device; an energy harvesting capability of the terminal device; a discontinuous transmission cycle corresponding to the first transmission state; or a duration of continuous transmission within the discontinuous transmission cycle corresponding to the first transmission state.

In some embodiments, the first transmission unit is further configured to send fifth information to the network device, the fifth information indicates one or more of: an energy storage capability of the terminal device; or an energy harvesting capability of the terminal device.

In some embodiments, the terminal device is an ambient energy-based device.

Those skilled in the art should understand that the relevant description of the above apparatus for transmission state determination according to the embodiment of the present disclosure can be understood with reference to the relevant description of the method for transmission state determination according to the embodiment of the present disclosure.

FIG. 12 is a second schematic structural diagram of an apparatus for transmission state determination according to an embodiment of the present disclosure, which is applied to a network device. As shown in FIG. 12, the apparatus for transmission state determination includes a second determination unit.

The second determination unit is configured to determine a transmission state of a terminal device, where the transmission state includes a plurality of types, and different transmission states are related to an energy storage state of the terminal device.

In some embodiments, the duration for data transmission is different in different transmission states.

In some embodiments, the transmission state is determined based on one or more of following parameters: whether to perform data transmission; a discontinuous transmission cycle; or a duration of continuous transmission within the discontinuous transmission cycle.

In some embodiments, different transmission states are determined based on different parameters.

In some embodiments, the apparatus for transmission state determination further includes a second receiving unit configured to receive first information from the terminal device, where the first information includes one or more of: energy storage state switching information of the terminal device; or transmission state switching information of the terminal device.

In some embodiments, the first information further indicates one or more of: a duration for which the terminal device remains in a switched transmission state; a discontinuous transmission cycle in the switched transmission state; or a duration of continuous transmission within the discontinuous transmission cycle in the switched transmission state.

In some embodiments, the first information is carried by one or more of: a Physical Uplink Shared Channel (PUSCH); a semi-persistently scheduled Physical Uplink Control Channel (PUCCH); HARQ-ACK feedback information corresponding to a Physical Downlink Control Channel (PDCCH); or Uplink Control Information (UCI).

In some embodiments, the apparatus for transmission state determination further includes a second transmission unit configured to send second information to the terminal device. The second information indicates the transmission state.

In some embodiments, the second receiving unit is configured to receive third information from the terminal device, the third information indicates an energy storage state of the terminal device.

In some embodiments, the transmission state includes a first transmission state and a second transmission state, and the second determination unit 1201 is configured to determine that the terminal device switches to the second transmission state when a first timer associated with the first transmission state expires. The first timer is started when the terminal device enters the first transmission state.

In some embodiments, the second determination unit 1201 is configured to restart the first timer in a case that the energy storage state of the terminal device meets a first condition before the first timer expires, where the first condition is determined based on an energy storage state associated with the first transmission state.

In some embodiments, the second receiving unit is further configured to receive fourth information from the terminal device. The fourth information indicates one or more of: the energy storage state of the terminal device meets the first condition; or restarting the first timer.

In some embodiments, the duration of the first timer is predefined, or configured by a network device, and the duration of the first timer is related to one or more of: an energy storage capability of the terminal device; an energy harvesting capability of the terminal device; a discontinuous transmission cycle corresponding to the first transmission state; or a duration of continuous transmission within the discontinuous transmission cycle corresponding to the first transmission state.

In some embodiments, the transmission state includes a first transmission state and a second transmission state, and the second determination unit 1201 is further configured to determine that the terminal device switches to the second transmission state if the amount of data transported by the terminal device meets a first threshold associated with the first transmission state in the first transmission state.

In some embodiments, the second determination unit 1201 is further configured to restart the second timer in a case that the amount of data transported by the terminal device does not meet the first threshold when a second timer expires in the first transmission state, where the second timer is started when the terminal device enters the first transmission state.

In some embodiments, the first threshold is predefined, or configured by a network device. The first threshold is related to one or more of: an energy storage capability of the terminal device; an energy harvesting capability of the terminal device; a discontinuous transmission cycle corresponding to the first transmission state; or a duration of continuous transmission within the discontinuous transmission cycle corresponding to the first transmission state.

In some embodiments, the second receiving unit is further configured to receive fifth information from the terminal device. The fifth information indicates one or more of: an energy storage capability of the terminal device; or an energy harvesting capability of the terminal device.

In some embodiments, the terminal device is an ambient energy-based device.

Those skilled in the art should understand that the relevant description of the above apparatus for transmission state determination according to the embodiment of the present disclosure can be understood with reference to the relevant description of the method for transmission state determination according to the embodiment of the present disclosure.

FIG. 13 is a schematic structural diagram of a communication device 1300 according to an embodiment of the present disclosure. The communication device may be a terminal device or a network device. The communication device 1300 illustrated in FIG. 13 includes a processor 1310 that can call and execute a computer program from a memory to implement the method in the embodiment of the present disclosure.

Optionally, as shown in FIG. 13, the communication device 1300 may further include a memory 1320. Here, the processor 1310 may call and execute a computer program from the memory 1320 to implement the method in the embodiment of the present disclosure.

The memory 1320 may be a separate device independent of the processor 1310, or may be integrated in the processor 1310.

Optionally, as shown in FIG. 13, the communication device 1300 may further include a transceiver 1330, and the processor 1310 may control the transceiver 1330 to communicate with other devices, specifically, may send information or data to or receive information or data from other devices.

Here, transceiver 1330 may include a transmitter and a receiver. The transceiver 1330 may further include antennas, and the number of antennas may be one or more.

Optionally, the communication device 1300 may specifically be a network device according to the embodiment of the present disclosure, and the communication device 1300 may realize corresponding processes realized by the network device in each method of the embodiment of the present disclosure, which will not be described again here for simplicity.

Optionally, the communication device 1300 may specifically be a mobile terminal/terminal device according to the embodiment of the present disclosure, and the communication device 1300 may realize corresponding processes realized by the mobile terminal/terminal device in each method of the embodiment of the present disclosure, which will not be described again here for simplicity.

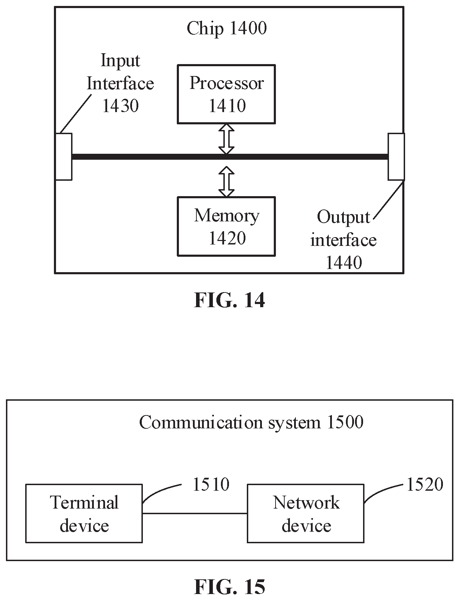

FIG. 14 is a schematic structural diagram of a chip according to an embodiment of the present disclosure. The chip 1400 shown in FIG. 14 includes a processor 1410 that can call and execute a computer program from a memory to implement the method in an embodiment of the present disclosure.

Optionally, as shown in FIG. 14, the chip 1400 may further include a memory 1420. Here, the processor 1410 may call and execute a computer program from the memory 1420 to implement the method in the embodiment of the present disclosure.

The memory 1420 may be a separate device independent of the processor 1410, or may be integrated in the processor 1410.

Optionally, the chip 1400 may also include an input interface 1430. Here, the processor 1410 may control the input interface 1430 to communicate with other devices or chips, and specifically, may acquire information or data from other devices or chips.

Optionally, the chip 1400 may also include an output interface 1440. The processor 1410 may control the output interface 1440 to communicate with other devices or chips, and specifically, may output information or data to other devices or chips.

Optionally, the chip can be applied to the network device in the embodiment of the present disclosure, and the chip can realize the corresponding process implemented by the network device in each method of the embodiment of the present disclosure, which will not be described again here for simplicity.

Optionally, the chip can be applied to the mobile terminal/terminal device in the embodiment of the present disclosure, and the chip can realize the corresponding process implemented by the mobile terminal/terminal device in each method of the embodiment of the present disclosure, which will not be described again here for simplicity.

It should be understood that the chip mentioned in the embodiment of the present disclosure may also be referred to as a system-level chip, a system chip, a chip system, a system-on-chip chip, or the like.

Embodiments of the present disclosure also provide a computer storage medium storing one or more programs, and the one or more programs can be executed by one or more processors to implement the method in the embodiments of the present disclosure.

FIG. 15 is a schematic block diagram of a communication system 1500 according to an embodiment of the present disclosure. As shown in FIG. 15, the communication system 1500 includes terminal devices 1510 and a network device 1520.

The terminal device 1510 may be used to realize the corresponding functions implemented by the terminal device in the above-described method, and the network device 1520 may be used to realize the corresponding functions implemented by the network device in the above-described method, which will not be described again here for simplicity.

It should be understood that the processor of the embodiments of the present disclosure may be an integrated circuit chip having signal processing capability. In implementation, the various steps of the above method embodiments may be accomplished by integrated logic circuitry of hardware in the processor or instructions in the form of software. The above processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. Various methods, operations and logic block diagrams disclosed in the embodiments of the disclosure may be implemented or performed. The general purpose processor may be a microprocessor, or the processor may be any conventional processor, etc. Operations in the methods disclosed in combination with the embodiments of the disclosure may be directly embodied as being performed and completed by a hardware decoding processor, or performed and completed by a combination of hardware in the decoding processor and software modules. The software modules may be located in random memory, flash memory, read-only memory, programmable read-only memory or electrically erasable programmable memory, registers and other storage medium mature in the art. The storage medium is located in the memory, and the processor reads the information in the memory and completes the steps of the method in combination with its hardware.

It is understood that the memory in embodiments of the present disclosure may be volatile memory or non-volatile memory, or may include both volatile and non-volatile memory. The non-volatile memory may be Read-Only Memory (ROM), Programmable ROM (PROM), Erasable PROM (EPROM), Electrically EPROM (EEPROM), or flash memory. The volatile memory may be a Random Access Memory (RAM) which serves as an external cache. By way of illustration, but not limitation, many forms of RAM are available, such as static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include but not limited to these and any other suitable types of memory.

It should be understood that the memory described above is exemplary, but not limiting, and, for example, the memory in embodiments of the present disclosure may also be an SRAM, a DRAM, an SDRAM, a DDR SDRAM, an ESDRAM, a SLDRAM, a DR RAM, etc. That is, the memory in embodiments of the present disclosure is intended to include but not limited to these and any other suitable types of memory.

The embodiments of the present disclosure further provide a computer-readable storage medium for storing a computer program.

Alternatively, the computer-readable storage medium may be applied to the network device in the embodiments of the present disclosure, and the computer program causes the computer to perform the corresponding processes implemented by the network device in the various methods of the embodiments of the present disclosure, which will not be repeated here for the sake of brevity.

Alternatively, the computer-readable storage medium may be applied to the mobile terminal/terminal device in the embodiments of the present disclosure, and the computer program causes the computer to perform corresponding processes implemented by the mobile terminal/terminal device in the various methods of the embodiments of the present disclosure, which will not be repeated here for the sake of brevity.

The embodiments of the present disclosure further provide a computer program product including computer program instructions.

Alternatively, the computer program product may be applied to the network device in the embodiments of the present disclosure, and the computer program instructions cause the computer to perform the corresponding processes implemented by the network device in the various methods of the embodiments of the present disclosure, which will not be repeated here for the sake of brevity.

Alternatively, the computer program product may be applied to the mobile terminal/terminal device in the embodiments of the present disclosure, and the computer program instructions cause the computer to perform the corresponding processes implemented by the mobile terminal/terminal device in the various methods of the embodiments of the present disclosure, which will not repeated here for the sake of brevity.

The embodiments of the present disclosure further provide a computer program.

Alternatively, the computer program may be applied to the network device in the embodiments of the present disclosure, and when the computer program is run on the computer, the computer performs the corresponding processes implemented by the network device in the various methods of the embodiments of the present disclosure, which will not be repeated here for the sake of brevity.

Alternatively, the computer program may be applied to the mobile terminal/terminal device in the embodiments of the present disclosure, and when the computer program is run on the computer, the computer performs the corresponding processes implemented by the mobile terminal/terminal device in the various methods of the embodiments of the present disclosure, which will not be repeated here for the sake of brevity.

Those skilled in the art will appreciate that the various example units and algorithm steps described in combination with the embodiments disclosed herein may be implemented in electronic hardware or a combination of computer software and electronic hardware. Whether these functions are performed in hardware or software depends on the specific application and design constraints of the technical solutions. Skilled artisans may use different methods for each particular application to implement the described functionality, but such implementation should not be considered outside the scope of the present disclosure.

Those skilled in the art will clearly appreciate that, for convenience and conciseness of description, the specific operating processes of the above systems, apparatuses and units may refer to the corresponding processes in the aforementioned method embodiments, which will not be repeated herein.

In several embodiments provided the present disclosure, it should be understood that the disclosed systems, apparatuses and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solution of the embodiments.

In addition, each functional unit in each embodiment of the present disclosure may be integrated in one processing unit, each unit may be physically present alone, or two or more units may be integrated in one unit.

The functions may be stored in a computer readable storage medium if implemented in the form of software functional units and sold or used as stand-alone products. Based on this understanding, the technical solutions of the present disclosure may be embodied in the form of a software product in essence or contributing to the prior art or part of the technical solutions, which computer software product is stored in a storage medium and includes instructions for causing a computer device (which may be a personal computer, a server, a network device, etc.) to perform all or part of the steps of the method described in various embodiments of the present disclosure. The aforementioned storage medium includes a U disk, a removable hard disk, a ROM, a RAM, a magnetic disk or an optical disk and other medium capable of storing program codes.

The above descriptions are only specific implementations of the present disclosure, however, the scope of protection of the disclosure is not limited thereto. Variation or replacement easily conceived by any technician familiar with this technical field within the technical scope disclosed in the present disclosure, should fall within the scope of protection of the disclosure. Therefore, the scope of protection of the disclosure should be subject to the scope of protection of the claims.

## Claims

1. A method for transmission state determination, comprising:
determining, by a terminal device, a transmission state, wherein the transmission state comprises a plurality of types, and different transmission states are related to an energy storage state of the terminal device.

2. The method of claim 1, wherein a duration for data transmission is different in different transmission states.

3. The method of claim 1 or 2, wherein the transmission state is determined based on one or more of following parameters:
whether to perform data transmission;
a discontinuous transmission cycle; or
a duration of continuous transmission within the discontinuous transmission cycle.

4. The method of claim 3, wherein different transmission states are determined based on different parameters.

5. The method of any one of claims 1 to 4, further comprising:
sending, by the terminal device, first information, wherein the first information comprises one or more of:
energy storage state switching information of the terminal device; or
transmission state switching information of the terminal device.

6. The method of claim 5, wherein the first information further indicates one or more of:
a duration for which the terminal device remains in a switched transmission state;
a discontinuous transmission cycle in the switched transmission state; or
a duration of continuous transmission within the discontinuous transmission cycle in the switched transmission state.

7. The method of claim 5 or 6, wherein the first information is carried by one or more of:
a Physical Uplink Shared Channel (PUSCH);
a semi-persistently scheduled Physical Uplink Control Channel (PUCCH);
HARQ-ACK feedback information corresponding to a Physical Downlink Control Channel (PDCCH); or
Uplink Control Information (UCI).

8. The method of any one of claims 1 to 4, wherein determining, by the terminal device, the transmission state comprises:
receiving, by the terminal device, second information from a network device, wherein the second information indicates the transmission state.

9. The method of claim 8, further comprising:
sending, by the terminal device, third information to the network device, wherein the third information indicates the energy storage state of the terminal device.

10. The method of any one of claims 1 to 9, wherein the transmission state comprises a first transmission state and a second transmission state, and the method further comprises:
switching, by the terminal device, to the second transmission state when a first timer associated with the first transmission state expires, wherein the first timer is started when the terminal device enters the first transmission state.

11. The method of claim 10, further comprising:
before the first timer expires, in a case that the energy storage state of the terminal device meets a first condition, restarting, by the terminal device, the first timer, wherein the first condition is determined based on an energy storage state associated with the first transmission state.

12. The method of claim 11, further comprising:
sending, by the terminal device, fourth information to a network device, wherein the fourth information indicates one or more of:
the energy storage state of the terminal device meets the first condition; or
restarting the first timer.

13. The method of any one of claims 10 to 12, wherein a duration of the first timer is predefined, or configured by a network device, and the duration of the first timer is related to one or more of:
an energy storage capability of the terminal device;
an energy harvesting capability of the terminal device;
a discontinuous transmission cycle corresponding to the first transmission state; or
a duration of continuous transmission within the discontinuous transmission cycle corresponding to the first transmission state.

14. The method of any one of claims 1 to 9, wherein the transmission state comprises a first transmission state and a second transmission state, and the method further comprises:
in the first transmission state, in a case that an amount of data transported by the terminal device meets a first threshold associated with the first transmission state, switching, by the terminal device, to the second transmission state.

15. The method of claim 14, further comprising:
in the first transmission state, in a case that the amount of data transported by the terminal device does not meet the first threshold when a second timer expires, restarting, by the terminal device, the second timer, wherein the second timer is started when the terminal device enters the first transmission state.

16. The method of claim 14 or 15, wherein the first threshold is predefined, or configured by a network device, and the first threshold is related to one or more of:
an energy storage capability of the terminal device;
an energy harvesting capability of the terminal device;
a discontinuous transmission cycle corresponding to the first transmission state; or
a duration of continuous transmission within the discontinuous transmission cycle corresponding to the first transmission state.

17. The method of claim 13 or 16, further comprising:
sending, by the terminal device, fifth information to the network device, wherein the fifth information indicates one or more of:
an energy storage capability of the terminal device;
the energy harvesting capability of the terminal device.

18. The method of any one of claims 1 to 17, wherein the terminal device is an ambient energy-based device.

19. A method for transmission state determination, comprising:
determining, by a network device, a transmission state of a terminal device, wherein the transmission state comprises a plurality of types, and different transmission states are related to an energy storage state of the terminal device.

20. The method of claim 19, wherein a duration for data transmission is different in different transmission states.

21. The method of claim 19 or 20, wherein the transmission state is determined based on one or more of following parameters:
whether to perform data transmission;
a discontinuous transmission cycle; or
a duration of continuous transmission within the discontinuous transmission cycle.

22. The method of claim 21, wherein different transmission states are determined based on different parameters.

23. The method of any one of claims 19 to 22, further comprising:
receiving, by the network device, first information from the terminal device, wherein the first information comprises one or more of:
energy storage state switching information of the terminal device; or
transmission state switching information of the terminal device.

24. The method of claim 23, wherein the first information further indicates one or more of:
a duration for which the terminal device remains in a switched transmission state;
a discontinuous transmission cycle in the switched transmission state; or
a duration of continuous transmission within the discontinuous transmission cycle in the switched transmission state.

25. The method of claim 23 or 24, wherein the first information is carried by one or more of:
a Physical Uplink Shared Channel (PUSCH);
a semi-persistently scheduled Physical Uplink Control Channel (PUCCH);
HARQ-ACK feedback information corresponding to a Physical Downlink Control Channel (PDCCH); or
Uplink Control Information (UCI).

26. The method of any one of claims 19 to 22, further comprising:
sending, by the network device, second information to the terminal device, wherein the second information indicates the transmission state.

27. The method of claim 26, further comprising:
receiving, by the network device, third information from the terminal device, wherein the third information indicates the energy storage state of the terminal device.

28. The method of any one of claims 19 to 27, wherein the transmission state comprises a first transmission state and a second transmission state, and the method further comprises:
determining, by the network device, that the terminal device switches to the second transmission state when a first timer associated with the first transmission state expires, wherein the first timer is started when the terminal device enters the first transmission state.

29. The method of claim 28, further comprising:
before the first timer expires, in a case that the energy storage state of the terminal device meets a first condition, restarting, by the network device, the first timer, wherein the first condition is determined based on an energy storage state associated with the first transmission state.

30. The method of claim 29, further comprising:
receiving, by the network device, fourth information from the terminal device, wherein the fourth information indicates one or more of:
the energy storage state of the terminal device meets the first condition; or
restarting the first timer.

31. The method of any one of claims 28 to 30, wherein a duration of the first timer is predefined, or configured by a network device, and the duration of the first timer is related to one or more of:
an energy storage capability of the terminal device;
an energy harvesting capability of the terminal device;
a discontinuous transmission cycle corresponding to the first transmission state; or
a duration of continuous transmission within the discontinuous transmission cycle corresponding to the first transmission state.

32. The method of any one of claims 19 to 27, wherein the transmission state comprises a first transmission state and a second transmission state, and the method further comprises:
in the first transmission state, in a case that an amount of data transported by the terminal device meets a first threshold associated with the first transmission state, determining, by the network device, that the terminal device switches to the second transmission state.

33. The method of claim 32, further comprising:
in the first transmission state, in a case that the amount of data transported by the terminal device does not meet the first threshold when a second timer expires, restarting, by the network device, the second timer, wherein the second timer is started when the terminal device enters the first transmission state.

34. The method of claim 32 or 33, wherein the first threshold is predefined, or configured by a network device, and the first threshold is related to one or more of:
an energy storage capability of the terminal device;
an energy harvesting capability of the terminal device;
a discontinuous transmission cycle corresponding to the first transmission state; or
a duration of continuous transmission within the discontinuous transmission cycle corresponding to the first transmission state.

35. The method of claim 31 or 34, further comprising:
receiving, by the network device, fifth information from the terminal device, wherein the fifth information indicates one or more of:
an energy storage capability of the terminal device;
the energy harvesting capability of the terminal device.

36. The method of any one of claims 19 to 35, wherein the terminal device is an ambient energy-based device.

37. An apparatus for transmission state determination, applied to a terminal device, the apparatus comprising:
a first determination unit, configured to determine a transmission state, wherein the transmission state comprises a plurality of types, and different transmission states are related to an energy storage state of the terminal device.

38. An apparatus for transmission state determination, applied to a network device, the apparatus comprising:
a second determination unit, configured to determine a transmission state of a terminal device, wherein the transmission state comprises a plurality of types, and different transmission states are related to an energy storage state of the terminal device.

39. A terminal device, comprising:
a memory for storing computer-executable instructions; and
a processor connected to the memory for implementing the method of any one of claims 1 to 14 by executing the computer-executable instructions.

40. A network device, comprising:
a memory for storing computer-executable instructions; and
a processor connected to the memory for implementing the method of any one of claims 15 to 28 by executing the computer-executable instructions.

41. A chip, comprising:
a processor, configured to call and execute a computer program from a memory, to cause a device installed with the chip to perform the method of any one of claims 1 to 18 or the method of any one of claims 19 to 36.

42. A computer-readable storage medium having stored thereon a computer program that, when executed by at least one processor, implements the method of any one of claims 1 to 18 or the method of any one of claims 19 to 36.

43. A computer program product, comprising: a computer storage medium storing a computer program, the computer program comprising instructions executable by at least one processor that, when executed by the at least one processor, implement the method of any one of claims 1 to 18 or the method of any one of claims 19 to 36.

44. A computer program causing a computer to perform the method of any one of claims 1 to 18 or the method of any one of claims 19 to 36.
